# EUROPÄISCHE PATENTANMELDUNG

(11) **EP 1 580 543 A2**
(43) Veröffentlichungstag der Anmeldung: **28.09.2005**
(21) Anmeldenummer: 05005043.4
(22) Anmeldetag: 08.03.2005
(51) Int. Cl.: G01M 1/36

(54) **Auswuchtvorrichtung zur Kompensation der Unwucht von Rotoren von Windkraftanlagen**

(30) Priorität: 26.03.2004 DE 102004014992
(71) Anmelder: Hofmann Mess- und Auswuchttechnik GmbH & Co. KG, 64319 Pfungstadt (DE)
(72) Erfinder: Danz, Günter, 64846 Gross-Zimmern (DE)
(74) Vertreter: Kirschner, Klaus Dieter

(57) **Zusammenfassung**

Eine Auswuchtvorrichtung zur Kompensation der Unwucht von mit Windfügeln ausgestatteten Rotoren (2) von Windkraftanlagen, ist gekennzeichnet durch wenigstens ein Unwuchtsensormodul (14) zum Messen der Unwucht des Rotors (2), wenigstens ein Auswuchtmodul (28) zum Auswuchten der Unwucht des Rotors (2), wenigstens ein Antriebsmodul (26) zum Erzeugen der Antriebsenergie für das Auswuchtmodul (28), wenigstens ein Leistungsmodul (24) zum Erzeugen eines Leistungssignales für den Betrieb des Antriebsmoduls (26), und einen Rechner (16) zum Erfassen der Signale des Unwuchtsensormoduls (14) und des Auswuchtmoduls (28) und zum Berechnen eines Steuersignals für das Leistungsmodul (24).

## Beschreibung

Die Erfindung bezieht sich auf eine Auswuchtvorrichtung zur Kompensation der Unwucht von Rotorblättern von Windkraftanlagen.

Seit mehreren Jahren werden bereits Windkraftanlagen zur Erzeugung von elektrischer Energie aus Windenergie benutzt. Derartige Windkraftanlagen umfassen mehrere Windkrafteinheiten, die jeweils einen Rotor und die dazugehörigen mechanischen und elektrischen Komponenten umfassen. Bei den Windkrafteinheiten wird die Windenergie ausgenutzt um den in der Regel mit mehreren Rotorblättern versehenen Rotor der Windkrafteinheit anzutreiben.

Der Rotor ist mit einem Generator verbunden, auf den die Drehung des Rotors mittels einer festen Verbindung übertragen wird und der durch die Drehung elektrische Energie erzeugt, die in das Versorgungsnetz eingespeist wird. Die Lager des Rotors sind dabei relativ großen Belastungen durch die Drehung des Rotors ausgesetzt. Diese Belastungen werden durch die Unwucht der Rotore noch verstärkt. Die Folge davon ist ein vorzeitiger Verschleiß der Rotorlager und damit verbunden lange Standzeiten der Windkraftanlage um die defekten Lager in den Rotoren der Windkrafteinheiten auszutauschen.

Es ist daher Aufgabe der Erfindung eine Auswuchtvorrichtung zur Kompensation der Unwucht von Rotorblättern von Windkraftanlagen zur Verfügung zu stellen.

Die Aufgabe wird durch die Auswuchtvorrichtung nach dem Hauptanspruch gelöst. Vorteilhafte Ausgestaltungen der Erfindung sind in den Unteransprüchen dargestellt.

Zur Lösung der Aufgabe der vorliegenden Erfindung wird eine Auswuchtvorrichtung für das oben genannte Verfahren zur Kompensation der Unwucht von Rotoren von Windkraftanlagen offenbart, das dadurch gekennzeichnet ist, dass die Auswuchtvorrichtung wenigstens ein Unwuchtsensormodul zum Messen der Unwucht des Rotors, wenigstens ein Auswuchtmodul zum Auswuchten der Unwucht des Rotors, wenigstens ein Antriebsmodul zum Erzeugen der Antriebsenergie für das Auswuchtmodul, wenigstens ein Leistungsmodul zum Erzeugen eines Leistungssignales für den Betrieb des Antriebsmoduls, einen Rechner zum Erfassen der Signale des Unwuchtsensormoduls und des Auswuchtmoduls und zum Berechnen eines Steuersignals für das Leistungsmodul, umfasst. Die Auswuchtvorrichtung ermöglicht ein schnelles und wirksames Erkennen und Ausgleichen von Unwuchten. Schäden an den Lagern des Rotors können somit erfolgreich vermieden und die Betriebszeit der Windkraftanlage deutlich verlängert werden.

Eine vorteilhafte Ausgestaltung der Erfindung ist dadurch gekennzeichnet, dass das Auswuchtmodul eine Kompensationsmasse zum Ausgleich der Unwucht des Rotors, ein Verstellmodul zum Verstellen der Kompensationsmasse, das seine Antriebsenergie von dem Antriebsmodul erhält, und ein Positionsbestimmungsmodul zum Bestimmen der Position der Kompensationsmasse umfasst.

Eine vorteilhafte Ausgestaltung der Erfindung ist dadurch gekennzeichnet, dass das Verstellmodul einen Antriebsmotor und eine Spindel, einen Hydraulikzylinder oder einen Pneumatikzylinder umfaßt.

Eine vorteilhafte Ausgestaltung der Erfindung ist dadurch gekennzeichnet, dass das Positionsbestimmungsmodul eine Kodierscheibe, die an der Spindel befestigt ist, mit einem Inkrementsensor und wenigstens zwei Positionssensoren für die Erfassung der Endlage der Kompensationsmasse umfasst. Diese Ausgestaltung des Positionsbestimmungsmodules ermöglicht eine sehr genaue Bestimmung der Lage der Kompensationsmasse, wie es zum Auswuchten von Rotoren für Windkraftanlagen gefordert wird.

Eine vorteilhafte Ausgestaltung der Erfindung ist dadurch gekennzeichnet, dass ein Magnet an der Kompensationsmasse zur Erfassung durch die Positionssensoren befestigt ist. Durch den Magneten wird ein berührungsloses Erfassen der Kompensationsmasse erreicht, indem die Positionssensoren einfach an der Aussenseite des Auswuchtmoduls befestigt werden.

Eine vorteilhafte Ausgestaltung der Erfindung ist dadurch gekennzeichnet, dass die Auswuchtvorrichtung eine Stromversorgungseinrichtung aufweist, die von der Windkraftanlage gespeist wird.

Eine vorteilhafte Ausgestaltung der Erfindung ist gekennzeichnet durch eine nachladbare Batterie in der Stromversorgungseinrichtung in der die elektrische Energie für die Versorgung der Auswuchtvorrichtung gepuffert wird.

Eine vorteilhafte Ausgestaltung der Erfindung ist dadurch gekennzeichnet, dass die Auswuchtvorrichtung als selbstversorgende Vorrichtung in den Windkrafteinheiten vorgesehen ist.

Eine vorteilhafte Ausgestaltung der Erfindung ist dadurch gekennzeichnet, dass in der Auswuchtvorrichtung eine Zeisteuerungseinrichtung vorgesehen ist, die so konfiguriert ist, dass an vorgegebenen Abständen jeweils einen Auswuchtvorgang durchgeführt wird.

Eine vorteilhafte Ausgestaltung der Erfindung ist dadurch gekennzeichnet, daß ein Zentralrechner für die Windkaftanlage mit mehreren Windkrafteinheiten vorgesehen ist, und dass die Sensoren und das Leistungsmodul mit dem Zentralrechner über ein Kommunikationsmedium verbunden sind. Wenn das Kommunikationsmedium eine Funkverbindung ist, muss der Rechner nicht mittels einer Drahtverbindung mit dem Leistungsmodul und den Sensoren verbunden sein. Der Rechner kann folglich an einer beliebigen Stelle innerhalb der Reichweite der Funkverbindung aufgestellt werden.

Eine vorteilhafte Ausgestaltung der Erfindung ist dadurch gekennzeichnet, daß die Auswuchtvorrichtungen in den Windkrafteinheiten oder ein Zentralrechner für die Windkaftanlage mit mehreren Windkrafteinheiten über ein Kommunikationsmedium mit einem übergeordneten Zentralrechner in einem Kontrollzentrum des Anlagenbetreibers verbunden sind, wobei mehrere Windkafteinheiten oder auch mehrere Windkraftanlagen von dem Kontrollzentrum des Anlagenbetreibers aus überwacht und ausgewuchtet werden können. In Diesem Fall ist das Kommunikationsmedium vorzugsweise das Internet, so dass der Rechner irgendwo auf der Welt aufgestellt werden kann, z.B. beim Hersteller des Rotors, um ständig die Unwucht des Rotors zentral Zü überwachen.

Gemäß der Erfindung ist eine Windkrafteinheit, dadurch gekennzeichnet, daß eine Auswuchtvorrichtung der ober genannten Art in wenigstens einem der Rotorblätter vorgesehen ist.

Im folgenden wird anhand eines Ausführungsbeispieles die vorliegende Erfindung in Verbindung mit den Figuren beschrieben, in denen
Figur 1 einen Rotor mit einer Auswuchtvorrichtung zum Auswuchten eines Rotors einer Windkraftanlage entsprechend der vorliegenden Erfindung zeigt,
Figur 2 das Prinzip der vorliegenden Erfindung zum Auswuchten eines Rotors einer Windkraftanlage entsprechend der vorliegenden Erfindung anhand eines Ausführungsbeispiels des Auswuchtmoduls zeigt,
Figur 3 eine Stromversorgung für die Auswuchtvorrichtung zeigt, und
Figur 4 eine weitere Ausführungsform der erfindungsgemäßen Auswuchtvorrichtung zeigt.

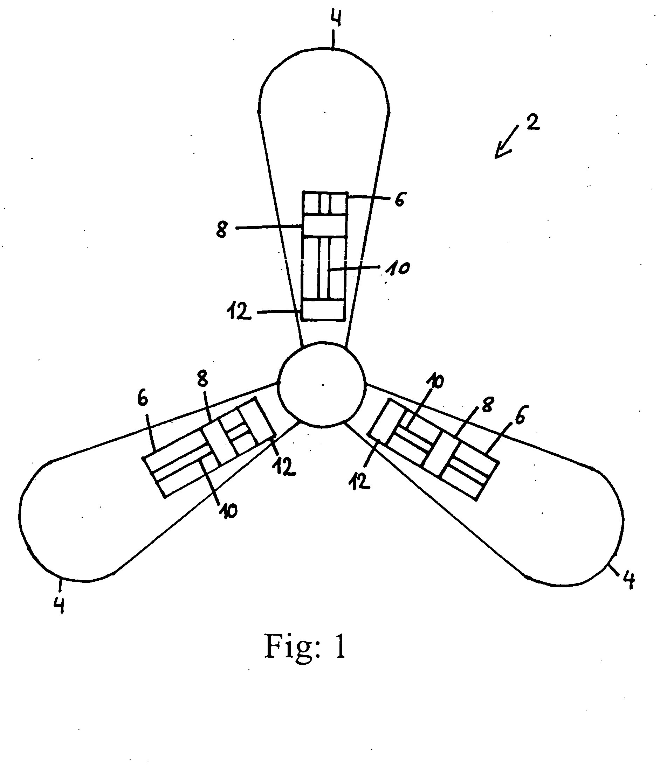

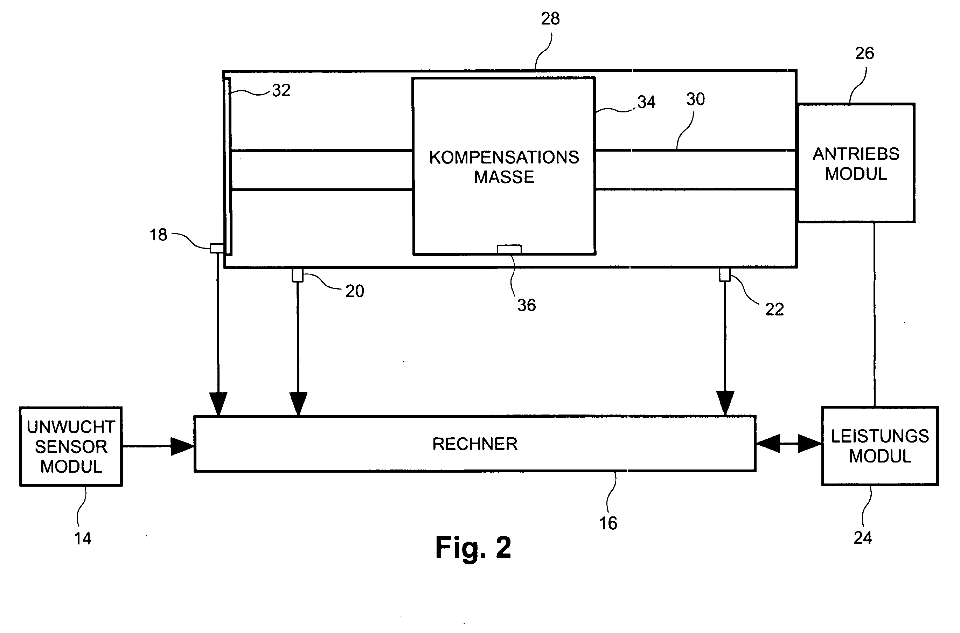

Figur 1 zeigt einen Rotor 2 mit drei Rotorblättern 4. Die Rotorblätter 4 weisen jeweils eine Auswuchtvorrichtung 6 zur Kompensation der Unwucht des Rotors 2 auf. Die Auswuchtvorrichtung 6 befindet sich in der Regel im Inneren der Rotorblätter 4. Die Auswuchtvorrichtung 6 in Figur 1 ist nur prinzipiell dargestellt und wird unten bei der Beschreibung von Figur 2 detailliert beschrieben.

Die Auswuchtvorrichtung 6 in Figur 1 zeigt eine Kompensationsmasse 8, die sich auf der Spindel 10 befindet. Die Spindel 10 ist auf einer Seite drehbar gelagert und auf der anderen Seite mit einem Antriebsmodul in Form eines Motors 12 verbunden. Durch die Verbindung der Spindel 10 mit dem Motor 12 kann die sich auf der Spindel 10 befindliche Kompensationsmasse 8 an beliebige Orte innerhalb des möglichen zu verfahrenden Bereiches bewegt werden. Somit kann die Unwucht des Rotor 2 durch die Vorstellung der Kompensationsmasse 8 ausgeglichen werden. Aufgrund einer besseren Verständlichkeit wurden alle anderen Bestandteile, die in der Beschreibung zur Figur 2 ausführlich beschrieben werden, in Figur 1 weggelassen.

Figur 2 zeigt den prinzipiellen Aufbau der Auswuchtvorrichtung zum Auswuchten der Unwucht eines Rotors 2 einer Windkaftanlage. Die Auswuchtvorrichtung misst über einen Unwuchtsensor 14 die Unwucht des Rotors 2. Der Unwuchtsensor 14 erzeugt ein Ausgangssignal, dass er an einen Rechner 16 weiterleitet. Neben dem Signal des Unwuchtsensors 14 erhält der Rechner 16 ferner ein Ausgangssignal eines Inkrementsensors 18 und die Ausgangssignale der Positionssensoren 20 und 22. In Abhängigkeit von den empfangenen Signalen bestimmt der Rechner 16 ein Ausgangssignal für das Leistungsmodul 24. Das Leistungsmodul 24 erzeugt ein Signal für das Antriebsmodul 26.

Das Leistungsmodul 24 kann zum Beispiel in Form einer Thyristorschaltung aufgebaut sein. Neben der Verbindung zwischen dem Rechner 16 und dem Leistungsmodul 24, gibt es noch eine weitere Verbindung zwischen dem Leistungsmodul 24 und einer Stromversorgung (nicht gezeigt), um ein ausreichend starkes Signal für das Antriebsmodul 26 erzeugen zu können. Abhängig von dem Signal des Leistungsmoduls 24 setzt das Antriebsmodul 26 in Form eines Motors das Signal des Leistungsmodul 24 in eine Drehbewegung um. Das Antriebsmodul 26 ist mit dem Auswuchtmodul 28 beziehungsweise mit dessen Spindel 30 verbunden. Die Spindel 30 ist auf der einen Seite mit dem Antriebsmodul 26 verbunden und auf der anderen Seite drehbar gelagert. An der drehbar gelagerten Seite der Spindel 30 ist des weiteren an der Spindel 30 eine Kodierscheibe 32 befestigt.

Die Kodierscheibe 32 dient in Verbindung mit dem Inkrementsensor 18 zur Positionsbestimmung einer Kompensationsmasse 34. Die Kompensationsmasse 34 kann durch die Drehung der Spindel 30 entlang der Spindel 30 verschoben werden. Somit kann in Abhängigkeit von der Position der Kompensationsmasse 34 die Unwucht eines Rotorblattes 4 ausgeglichen werden. Die Positionssensoren 20 und 22 dienen in Verbindung mit einem Magneten 36 zur Bestimmung der beiden Endlagen der Kompensationsmasse 34.

Über den Unwuchtsensor 14 wird die Unwucht eines Rotors 2 erfasst. Der Rechner 16 berechnet fortlaufend die notwendige Stellung der Kompensationsmasse zum Ausgleich der Unwucht des Rotors anhand der weiteren Signale des Inkrementsensors 18 und der Positionssensoren 20 und 22. Mit Hilfe dieser Signale wird ein Signal für das Leistungsmodul 24 erzeugt, um das Antriebsmodul 26 entsprechend ansteuern zu können und die Kondensationsmasse 34 so zu verfahren, dass die Unwucht eines Rotorblattes 4 ausgeglichen wird.

Die genaue Positionserfassung der Kompensationsmasse 34 wird durch die Kodierscheibe 32 mit Hilfe des Inkrementsensors 18 und der Positionssensoren 20 und 22 mit Hilfe des Magneten 36 realisiert. Somit ist mit der vorliegenden Erfindung eine effiziente Möglichkeit vorhanden, um die Unwucht von Rotorblättern 4 von Windkraftanlagen schnell und effizient auszugleichen.

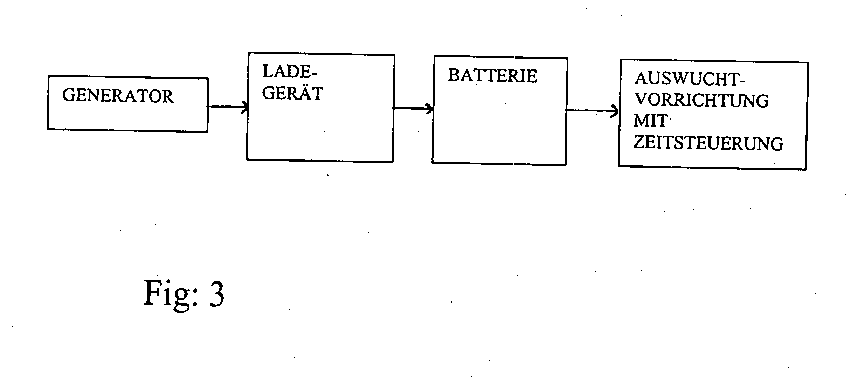

Die Auswuchtvorrichtung kann eine Stromversorgungseinrichtung 38 gemäß Fig. 3 an sich bekannter Bauart aufweisen, die von der Windkraftanlage gespeist wird. Ein Generator 40 der Windkrafteinheit speist über ein Ladegerät 42 eine nachladbare Batterie 44 in der Stromversorgungseinrichtung 38, die die elektrische Energie für die Versorgung der Auswuchtvorrichtung 2 puffert. In der Auswuchtvorrichtung ist eine Zeisteuerungseinrichtung (nicht gezeigt) vorgesehen, die so konfiguriert ist, dass an vorgegebenen Abständen jeweils einen Auswuchtvorgang durchgeführt wird. Damit ist die Auswuchtvorrichtung als selbstversorgende Vorrichtung in den Windkrafteinheiten vorgesehen.

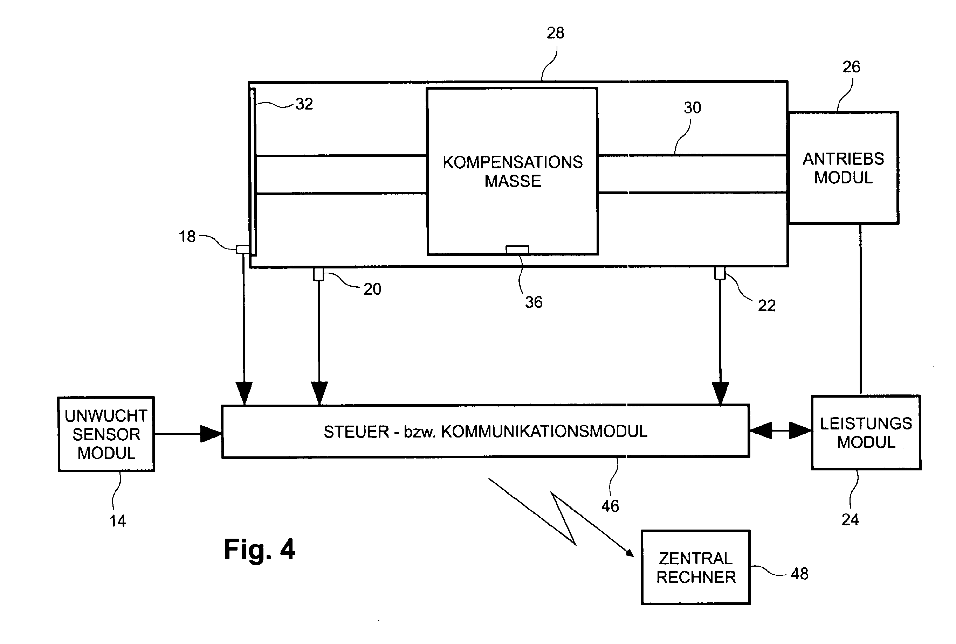

Gemäß der Ausführungsform von Fig. 4 ist über ein Steuer- bzw. Kommunikatinsmodul 46 ein Zentralrechner 48 für die Windkaftanlage mit mehreren Windkrafteinheiten verbunden, wobei die Sensoren und das Leistungsmodul mit dem Zentralrechner 48 über ein Kommunikationsmedium verbunden sind. Wenn das Kommunikationsmedium eine Funkverbindung ist, muss der Zentralrechner nicht mittels einer Drahtverbindung mit dem Leistungsmodul und den Sensoren verbunden sein. Der Zentralrechner 48 kann folglich an einer beliebigen Stelle innerhalb der Reichweite der Funkverbindung aufgestellt werden.

Nach einer weiteren Ausgestaltung sind die Auswuchtvorrichtungen in den Windkrafteinheiten oder ein Zentralrechner für die Windkaftanlage mit mehreren Windkrafteinheiten über ein Kommunikationsmedium mit einem übergeordneten Zentralrechner in einem Kontrollzentrum des Anlagenbetreibers verbunden, wobei mehrere Windkafteinheiten oder auch mehrere Windkraftanlagen von dem Kontrollzentrum des Anlagenbetreibers aus überwacht und ausgewuchtet werden können. In Diesem Fall ist das Kommunikationsmedium vorzugsweise das Internet, so dass der übergeordnete Zentralrechner beispielsweise beim Hersteller des Rotors aufgestellt sein kann, um ständig die Unwucht des Rotors zentral zu überwachen.

## Patentansprüche

1. Auswuchtvorrichtung zur Kompensation der Unwucht von mit Windfügeln ausgestatteten Rotoren (2) von Windkraftanlagen, **gekennzeichnet durch**:
wenigstens ein Unwuchtsensormodul (14) zum Messen der Unwucht des Rotors (2),
wenigstens ein Auswuchtmodul (28) zum Auswuchten der Unwucht des Rotors (2),
wenigstens ein Antriebsmodul (26) zum Erzeugen der Antriebsenergie für das Auswuchtmodul (28),
wenigstens ein Leistungsmodul (24) zum Erzeugen eines Leistungssignales für den Betrieb des Antriebsmoduls (26), und
einen Rechner (16) zum Erfassen der Signale des Unwuchtsensormoduls (14) und des Auswuchtmoduls (28) und zum Berechnen eines Steuersignals für das Leistungsmodul (24).

2. Auswuchtvorrichtung nach Anspruch 1, **dadurch gekennzeichnet, dass** das Auswuchtmodul (28) eine radial zur Rotationsachse des Rotors verstellbare Kompensationsmasse (34) zum Ausgleich der Unwucht des Rotors (2), ein Verstellmodul (30) zum Verstellen der Kompensationsmasse (34), das seine Antriebsenergie von dem Antriebsmodul (26) erhält, und ein Positionsbestimmungsmodul (18, 32, 20, 22, 36) zum Bestimmen der Position der Kompensationsmasse (34) umfasst.

3. Auswuchtvorrichtung nach Anspruch 4, **dadurch gekennzeichnet, dass** das Verstellmodul (30) einen Antriebsmotor (12) und eine Spindel (10), einen Hydraulikzylinder oder einen Pneumatikzylinder umfaßt.

4. Auswuchtvorrichtung nach Anspruch 2, **dadurch gekennzeichnet, dass** das Positionsbestimmungsmodul (18, 32, 20, 22, 36) eine Kodierscheibe (32), die an der Spindel (30) befestigt ist, mit einem Inkrementsensor (32) und wenigstens zwei Positionssensoren (20, 22) für die Erfassung der Endlage der Kompensationsmasse (34) umfasst.

5. Auswuchtvorrichtung nach Anspruch 2, **dadurch gekennzeichnet, dass** ein Magnet (36) an der Kompensationsmasse (34) zur Erfassung durch die Positionssensoren (20, 22) befestigt ist.

6. Auswuchtvorrichtung nach einem der vorhergehenden Ansprüche, **dadurch gekennzeichnet, dass** die Auswuchtvorrichtung eine Stromversorgungseinrichtung aufweist, die von der Windkraftanlage gespeist wird.

7. Auswuchtvorrichtung nach Anspruch 6, **gekennzeichnet durch** eine nachladbare Batterie in der Stromversorgungseinrichtung in der die elektrische Energie für die Versorgung der Auswuchtvorrichtung gepuffert wird.

8. Auswuchtvorrichtung nach einem der vorhergehenden Ansprüche, **dadurch gekennzeichnet, dass** die Auswuchtvorrichtung als selbstversorgende Vorrichtung in den Windkrafteinheiten vorgesehen ist.

9. Auswuchtvorrichtung nach Anspruch 8, **dadurch gekennzeichnet, dass** in der Auswuchtvorrichtung eine Zeisteuerungseinrichtung vorgesehen ist, die so konfiguriert ist, dass an vorgegebenen Abständen jeweils einen Auswuchtvorgang durchgerührt wird.

10. Auswuchtvorrichtung nach Anspruch 1, **dadurch gekennzeichnet, daß** ein Zentralrechner für die Windkaftanlage mit mehreren Windkrafteinheiten vorgesehen ist, und dass die Sensoren (14, 18, 20, 22) und das Leistungsmodul (24) mit dem Zentralrechner (16) über ein Kommunikationsmedium verbunden sind.

11. Auswuchtvorrichtung nach Anspruch 1, **dadurch gekennzeichnet, daß** die Auswuchtvorrichtungen in den Windkrafteinheiten oder ein Zentralrechner für die Windkaftanlage mit mehreren Windkrafteinheiten über ein Kommunikationsmedium mit einem übergeordneten Zentralrechner in einem Kontrollzentrum des Anlagenbetreibers verbunden sind, wobei mehrere Windkafteinheiten oder auch mehrere Windkraftanlagen von dem Kontrollzentrum des Anlagenbetreibers aus überwacht und ausgewuchtet werden können.

12. Auswuchtvorrichtung nach Anspruch 10 oder 11, **dadurch gekennzeichnet, daß** das Kommunikationsmedium eine Funkverbindung oder ein Internetverbindung ist.

13. Windkrafteinheit, **dadurch gekennzeichnet, daß** eine Auswuchtvorrichtung nach einem der Ansprüche 1 bis 9 in wenigstens einem der Rotorblätter (4) vorgesehen ist.
